# EUROPÄISCHE PATENTSCHRIFT

(11) **EP 0 843 110 B1**
(45) Veröffentlichungstag und Bekanntmachung des Hinweises auf die Patenterteilung: **21.03.2001**
(21) Anmeldenummer: 97118500.4
(22) Anmeldetag: 24.10.1997
(51) Int. Cl.: F16F 9/14, B60G 15/00, B60G 11/46

(54) **Vorrichtung zur höhenveränderlichen Abstützung eines Radträgers oder Achskörpers**
Device for height variable support of a wheel carrier or on an axle body
Dispositif pour le support variable en hauteur d'un support de roue ou d'un corps d'essieu

(30) Priorität: 15.11.1996 DE 19647300
(43) Veröffentlichungstag der Anmeldung: 20.05.1998
(73) Patentinhaber: DaimlerChrysler AG, 70567 Stuttgart (DE)
(72) Erfinder: Busch, Werner, 71384 Weinstadt (DE)

(56) Entgegenhaltungen:
- DE-A- 1 755 758
- DE-A- 2 311 651
- DE-A- 2 515 986
- DE-A- 3 525 965
- DE-A- 4 015 777
- DE-A- 4 443 809
- DE-B- 1 151 743
- US-A- 2 199 063
- US-A- 3 392 635
- US-A- 5 005 859

## Beschreibung

Die Erfindung betrifft eine Vorrichtung zur höhenveränderlichen Abstützung eines einzelnen über Lenker gelagerten Radträgers oder eines Achskörpers am Aufbau eines Kraftfahrzeugs, mit einem am Aufbau befestigten, als Hydromotor mit mindestens einem Druckraum ausgebildeten Stellglied, dessen schwenkbare Stellwelle über ein Gestänge, das mindestens einen Hebelarm enthält, auf den Radträger, dessen Lenker oder den Achskörper wirkt.

Aus dem "Handbuch für Kraftfahrzeugtechnik", Seite 729 von Buschmann/Koessler, Wilhelm Heyne verlag, München, aus dem Jahr 1976 ist eine derartige Vorrichtung bekannc. Die dort gezeigte Vorrichtung betätigt mittels eines Stellgliedes einen annähernd vertikal ausgerichteten Hebelarm, der über einen zur Fahrzeuglängsachse parallelen Drehstab auf einen zweiten, horizontal liegenden, achsparallelen Hebelarm auf eine Fahrzeughalbachse wirkt. Zwischen dem Achskörper der Fahrzeughalbachse und dem Hebelarm ist ein Stab zur Kraftübertragung eingebaut. Der Drehstab ist am Fahrzeugaufbau in mindestens einem Schwenkgelenk drehbar gelagert. Die Vorrichtung benötigt am Fahrzeugaufbau mehrere Aufhängepunkte und viel Bauraum für das aufwendige Gestänge. Außerdem hat sie eine nicht regulierbare Steifigkeit.

Der Erfindung liegt das Problem zugrunde, eine Vorrichtung zur höhenveränderlichen Abstützung eines einzelnen über Lenker gelagerten Radträgers oder eines Achskörpers am Aufbau eines Kraftfahrzeugs zu schaffen, die als aktive Fahrwerksregelung von der Fahrbahn erzeugte Schwingungsanregungen absorbieren. kann. Die Vorrichtung soll ferner bei kleinem Bauraum und geringer Teilezahl überlastungssicher und wartungsfrei oder zumindest wartungsarm sein.

Das Problem wird mit den Merkmalen des Hauptanspruchs gelöst. Der Hebelarm, auf den das hydraulische Stellglied direkt wirkt, ist als mechanische Feder gestaltet. Auch ist mindestens ein belasteter Druckraum des Stellgliedes über mindestens ein Rückschlagventil mit einem geringer oder nicht belasteten Druckraum oder einem Rücklauf hydraulisch verbunden. Über das Rückschlagventil wird eine unzulässige Druckerhöhung im belasteten Druckraum, beispielsweise durch das Einfedern eines Rades aufgrund einer Fahrbahnunebenheit, unmittelbar abgebaut. Alternativ oder zusätzlich zum Rückschlagventil kann der belastete Druckraum auch an einem Hydraulikspeicher angeschlossen sein, wodurch die Steifigkeit des hydraulischen Stellgliedes verringert wird.

Die u.a. als Niveauregulierung verwendbare Vorrichtung stützt das entsprechende Rad - ohne Zwischenschaltung der regulären Federung - mit mechanischen und ggf. hydraulischen Mitteln elastisch ab. Außerdem wird eine den Fahrkomfort oder die Funktion beeinträchtigende Überlastung der Vorrichtung durch mindestens ein Rückschlagventil verhindert.

Als Hydromotor kann beispielsweise ein Schwenkkolbenmotor mit mindestens einem belasteten Druckraum sein. Ebenso denkbar ist ein Drehzylinder oder dergleichen.

Zur Übertragung der Schwenkbewegung des Hebelarms auf den Radträger bzw. dessen Lenker oder auf den Achskörper kann zwischen dem freien Ende des Hebelarms und einer entsprechenden Anlenkstelle am Lenker oder Achskörper ein Stab angeordnet sein. U.a. durch Kippbewegungen gleicht der Stab die Verlagerung seiner beiden Anlenkstellen beim Ein- und Ausfedern des entsprechenden Rades aus. Selbstverständlich kann anstelle des Stabes u.a. auch eine Anlenkung mit mindestens einem Schiebegelenk verwendet werden.

Weitere Einzelheiten der Erfindung ergeben sich aus den nicht oder nur teilweise zitierten Unteransprüchen und der nachfolgenden Beschreibung von einer schematisch dargestellten Ausführungsform:
- Figur 1:: Achse mit integrierter Niveauregulierung;
- Figur 2:: Mittelteil des Gehäuses mit dem Schwenkkolben im Querschnitt;
- Figur 3:: Schwenkkolbenmotor im Längsschnitt;
- Figur 4:: Stellwelle mit einer rahmenförmigen Kolbendichtung.

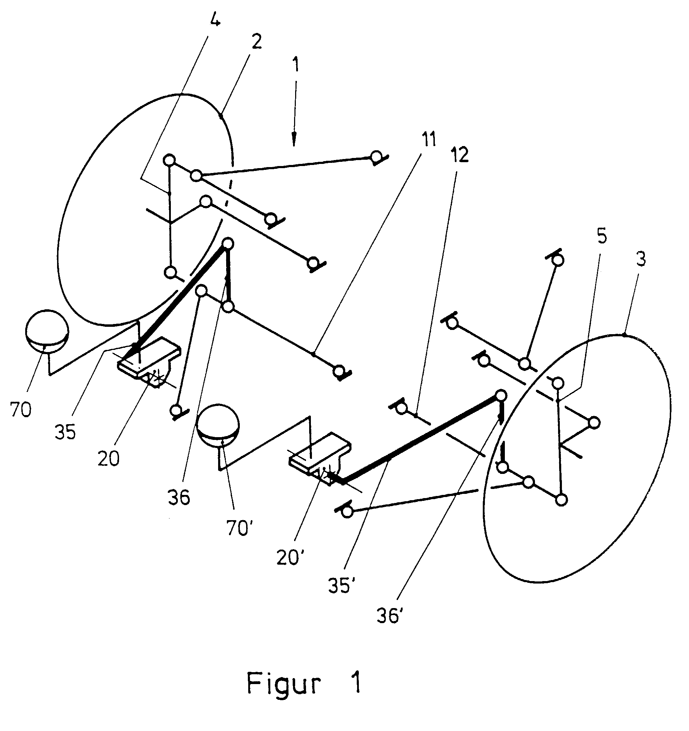

In Figur 1 ist beispielhaft eine lenkbare Doppelquerlenkerachse (1) mit zwei Rädern (2) und (3) vereinfacht dargestellt. Auf jeder Radseite führen die oberen und unteren Querlenker die entsprechenden Radträger (4) und (5). Auf die unteren, annähernd achsparallelen Querlenkerstäbe (11) und (12) wirkt eine Niveauregulierung.

Die Niveauregulierung besteht pro Achshälfte aus einem Hydromotor (20, 20') und einem Gestänge (35, 36; 35', 36'). Der einzelne am Kraftfahrzeugaufbau befestigte Hydromotor (20, 20') hat eine Stellwelle (31) die einen Hebelarm (35) aus einer hier annähernd horizontalen Neutrallage auf- und abschwenken kann. Jeder als federelastischer Biegestab ausgebildete Hebelarm (35, 35') stützt sich über einen hier weitgehend vertikal ausgerichteten Stab (36, 36') gelenkig ab.

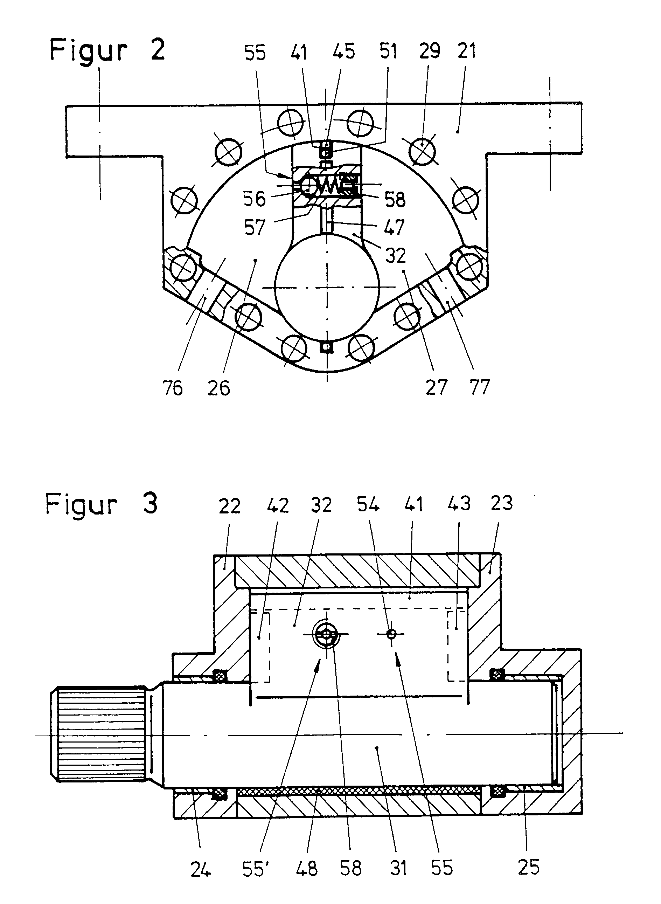

Die Figuren 2 bis 4 zeigen als Hydromotor einen Schwenkkolbenmotor (20). Letzterer hat ein dreiteiliges Gehäuse (21-23), in dem ein auf der Stellwelle (31) sitzender, Flügel- oder Schwenkkolben (32) eingeschlossen ist und den Gehäuseinnenraum in zwei Druckräume (26) und (27) aufteilt.

Das Gehäuse (21-23) besteht beispielsweise aus einem kanalartigen bzw. rohrförmigen Mittelteil (21), das an seinen Stirnseiten mit jeweils einem Gehäusedeckel (22, 23) verschlossen ist. Das Mittelteil (21) ist nach Figur 2 mit nicht dargestellten Schrauben zwischen den Gehäusedeckeln (22, 23) eingespannt, wobei die Schrauben in Längsbohrungen (29) liegend einen ersten Gehäusedeckel und das Mittelteil durchqueren, um im zweiten Gehäusedeckel verschraubt zu sein.

Beidseits des beispielsweise um ca. 120° schwenkbaren Schwenkkolbens (32) befinden sich die Druckräume (26) und (27). Der sie trennende Schwenkkolben hat hier rechteckige Kolbenflächen.

Zur gegenseitigen Abdichtung der Druckräume (26) und (27) ist in der an der zylindrischen Gehäuseinnenwandung anliegenden Kontur des Schwenkkolbens (32) eine zur Mittellinie der Stellwelle (31) parallele Längsnut (41) eingearbeitet. Im Grund der Längsnut (41) liegt ein elastisches Rundmaterial (51) aus Gummi oder einem hydraulikölbeständigen Elastomer, das eine Dichtleiste (45) vorspannt. Die annähernd rechteckige Dichtleiste (45) ist beispielsweise aus PTFE.

Zwischen der Stellwelle (31) und dem Mittelteil (21) des Gehäuses ist ebenfalls ein Dichtelement (48) angeordnet. Es kann ebenso aufgebaut sein, wie die Dichtelemente (45, 51) in der Längsnut (41).

An den seitlichen Stirnflächen des Schwenkkolbens (32) sind radial zur Mittellinie der Stellwelle (31) orientierte Radialnuten (42) und (43) ausgebildet. In jeder Radialnut (42, 43) liegt als Vorspannelement ein elastisches Rundmaterial, das auf eine benachbarte Dichtleiste, beispielsweise (47), drückt.

Die Stellwelle (31) mit dem Schwenkkolben (32) ist in den Gehäusedeckeln (22, 23) beispielsweise in Gleitbuchsen (24, 25) gelagert. Zu den Druckräumen (26, 27) hin sind die Gehäusedeckel (22, 23) mittels Dichtringen abgedichtet.

Die Stellwelle (31) ist an ihrem aus dem Gehäuse (21-23) herauskragenden Ende beispielsweise kerbverzahnt. Auf der Kerbverzahnung sitzt der Hebelarm (35).

Soll der Aufbau des Kraftfahrzeugs beispielsweise gegenüber dem Rad (2) aus Figur 1 angehoben werden, so wird der Druckraum (26) des Hydromotors (20) über eine an einer Bohrung (76) angeschlossenen Hydraulikleitung mit Druck beaufschlagt. Der andere Druckraum (27) ist u.a über die Bohrung (77) mit einem Rücklauf oder einem Hydrauliktank verbunden und somit druckentlastet. Der Schwenkkolben (32) dreht die Stellwelle (31) annähernd proportional der geförderten Druckölmenge nach Figur 1 und 2 im Uhrzeigersinn. Der an der Stellwelle (31) angeflanschte Hebelarm (35) schwenkt nach unten und belastet den auf dem Lenker (11) gelenkig aufliegenden Stab (36). Die linke Radaufhängung, vgl. Figur 1, schwenkt in Ausfederrichtung vom Aufbau um einen bestimmbaren Hub weg.

Das durch den Hydromotor (20) belastete Rad (2) überträgt Fahrbahnstörungen über den Hydromotor (20) und das Gestänge (35, 36) gegebenenfalls direkt an den Aufbau. Um die Steifigkeit der Niveauregulierung zu verringern, ist der Hebelarm (35) als Biegefeder ausgebildet. Es kann auch der Druckraum (25) mit einem Hydraulikspeicher (70) hydraulisch verbunden werden, vgl. Figur 1.

Zusätzlich oder alternativ können beispielsweise im Schwenkkolben (32), vgl. Figur 2 und 3, zwei gegeneinander wirkende Rückschlagventile (55) und (55') nebeneinander integriert werden. Das in Figur 2 dargestellte Rückschlagventil (55) umfaßt eine Ventilkugel (56), eine Ventilfeder (57) und eine Einstellschraube (58). Die Ventilkugel (56) verschließt im Regelfall eine in den Druckraum (26) mündende Ventilbohrung (54). Sie wird mittels der über die Einstellschraube (53) vorgespannten Ventilfeder (57) dichtend auf ihren Ventilsitz gepreßt. Sobald der Druck im Druckraum (26) wegen eines das Rad (2) einfedernden Stoßes einen vorgegebenen Grenzdruck übersteigt, öffnet das Rückschlagventil (55) in Richtung des Druckraumes (27). Die aus dem Druckraum (27) abgeflossene Ölmenge wird nach der Störung wieder ersetzt.

Das benachbarte Rückschlagventil (55') entlastet im Bedarfsfall den Druckraum (27) beim ruckartigen Ausfedern des Rades (2).

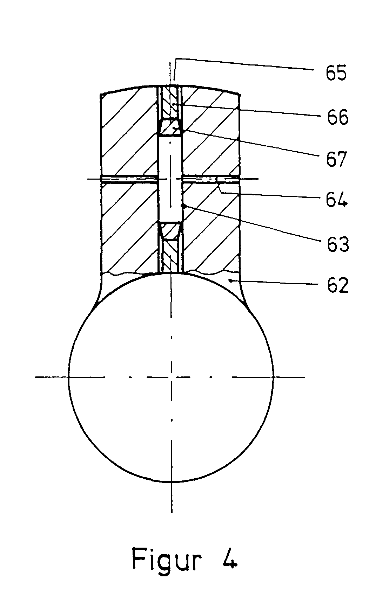

In Figur 4 ist an der Stellwelle (31) ein Schwenkkolben (62) mit einer anderen Kolbendichtung (65) dargestellt. Der dortige Schwenkkolben (62) hat einen mittigen Längsschlitz (63), der sich über die gesamte Kolbenfläche erstreckt. Zusätzlich haben die beiden Kolbenhälften je eine drosselnde Querbohrung (54). Im Längsschlitz (63) sitzt eine Rahmendichtung (65), die zwei Bereiche aufweist. Ihr äußerer Bereich, der bei einer Bewegung des Schwenkkolbens (32) an den Gehäuseinnenwandungen entlanggleitet, ist ein Rahmen (66). Der Rahmen (66) hat einen rechteckigen Einzelquerschnitt. Er besteht vorzugsweise aus PTFE und ist schmäler als die Kolbenschlitzbreite. An den innenliegenden Seiten des die Druckräume (26) und (27) gegeneinander abdichtenden PTFE-Rahmens (66) liegt ein zweiter Rahmen (67) aus einem hydraulikölbeständigen Elastomer an. Dieser Rahmen (67) hat einen trapezförmigen Einzelquerschnitt, der sich zum Kolbenschlitzinnenbereich verbreitert. Die innenliegenden Rahmenseiten werden über die drosselnden Querbohrungen (64) mit Druckmittel beaufschlagt, so daß die Rahmendichtung (65) nach außen gegen die Gehäuseinnenwandungen gedrückt wird.

### Bezugszeichenliste:

- 1: Kraftfahrzeugachse, Doppelquerlenkerachse
- 2, 3: Räder
- 4, 5: Radträger

- 11, 12: Lenker

- 20, 20': Schwenkkolbenmotor, Hydromotor
- 21: Gehäusemittelteil
- 22, 23: Gehäusedeckel
- 24, 25: Gleitbuchsen
- 26, 27: Druckräume

- 29: Längsbohrungen

- 31: Stellwelle
- 32: Schwenkkolben

- 35, 35': Hebelarm
- 36, 36': Stab

- 41: Längsnut
- 42, 43: Radialnuten

- 45, 48: Dichtleisten, in Längsrichtung
- 47,: Dichtleiste, in Radialrichtung

- 51: Vorspannelemente
- 54: Ventilbohrung
- 55, 55': Rückschlagventile
- 56: Ventilkugel
- 57: Ventilfeder
- 58: Einstellschraube mit Durchgangsbohrung, Gewindestift

- 62: Schwenkkolben
- 63: Längsschlitz
- 64: Bohrungen
- 65: Rahmendichtung
- 66: PTFE-Rahmen
- 67: Elastomerrahmen

- 70, 70': Hydraulikspeicher
- 76, 77: Bohrungen, Hydraulikanschlüsse

## Patentansprüche

1. Vorrichtung zur höhenveränderlichen Abstützung eines einzelnen über Lenker gelagerten Radträgers oder eines Achskörpers am Aufbau eines Kraftfahrzeugs, mit einem am Aufbau befestigten als Hydromotor mit mindestens einem Druckraum ausgebildeten Stellglied, dessen schwenkbare Stellwelle über ein Gestänge, das mindestens einen Hebelarm enthält, auf den Radträger, dessen Lenker oder den Achskörper wirkt,
dadurch gekennzeichnet,
- daß der Hebelarm (35, 35') als mechanische Feder gestaltet ist und
- daß mindestens ein belasteter Druckraum (25) des Hydromotors (20, 20') über mindestens ein Rückschlagventil (55) mit einem geringer oder nicht belasteten Druckraum (27) oder einem Rücklauf hydraulisch verbunden ist und/oder
- daß pro Hydromotor (20, 20') mindestens ein belasteter Druckraum (26) an einem Hydraulikspeicher (70, 70') angeschlossen ist.

2. Vorrichtung gemäß Anspruch 1, dadurch gekennzeichnet, daß der Hydromotor (20, 20') ein Schwenkkolbenmotor ist.

3. Vorrichtung gemäß Anspruch 1, dadurch gekennzeichnet, daß das Rückschlagventil (55) einstellbar ist.

4. Vorrichtung gemäß Anspruch 1, dadurch gekennzeichnet, daß das Rückschlagventil (55) zum belasteten Druckraum (26) hin schließbar ist.

5. Vorrichtung gemäß Anspruch 1, dadurch gekennzeichnet, daß der Hebelarm (35, 35') über einen Stab (36, 36') auf den Radträger (4, 5), dessen Lenker (11, 12) oder den Achskörper wirkt.

6. Vorrichtung gemäß Anspruch 4, dadurch gekennzeichnet, daß der Stab (36, 36') annähernd parallel zur Einfederrichtung des Radträgers (4, 5) oder des Achskörpers ausgerichtet ist.

## Claims

1. Device, for supporting, at variable heights, an individual wheel support which is itself supported by means of guide rods, or an axle beam, on the body of a vehicle, with a control member, formed with at least one surge chamber, attached to the body as a hydromotor, the pivoting adjusting shaft of this control member acting, by means of a linkage element which includes at least one lever arm, on the wheel support, its guide rods or the axle beam,
characterized in that
- the lever arm (35, 35') is formed as a mechanical spring and
- at least one loaded surge chamber (26) of the hydromotor (20, 20') is connected, via at least one check valve (55), to a surge chamber (27) which is not loaded or is loaded to a lesser extent and/or
- at least one loaded surge chamber (26), per hydromotor (20, 20'), is connected to a hydraulic accumulator (70, 70').

2. Device in accordance with claim 1, characterized in that the hydromotor (20, 20') is a swinging piston engine.

3. Device in accordance with claim 1, characterized in that the check valve (55) is adjustable.

4. Device in accordance with claim 1, characterized in that the check valve (55) can be closed towards the loaded surge chamber (26).

5. Device in accordance with claim 1, characterized in that the lever arm (35, 35') acts on the wheel support (4, 5), its guide rods (11, 12) or the axle beam, by means of a bar (36, 36').

6. Device in accordance with claim 4, characterized in that the bar (36, 36') is aligned approximately parallel to the direction of springing of the wheel support (4, 5) of the axle beam.

## Revendications

1. Dispositif de soutien réglable en hauteur d'un support de roue ou d'un corps de roue, individuel, monté par l'intermédiaire de bras articulés, sur la carrosserie d'un véhicule, avec un organe de réglage fixé à la carrosserie, réalisé sous forme de moteur hydraulique comportant au moins une enceinte à pression, organe de réglage dont l'arbre de réglage susceptible de pivoter agit, par l'intermédiaire d'une tringlerie; contenant au moins un bras de levier, sur le support de roue, son bras articulé ou le corps d'essieu,
caractérisé
- en ce que le bras de levier (35, 35') est réalisé sous la forme de ressort mécanique, et
- en ce qu'au moins une enceinte à pression (26) sollicitée du moteur hydraulique (20, 20') est reliée hydrauliquement, par l'intermédiaire d'au moins un clapet anti-retour (55), à une enceinte à pression (27) plus faiblement sollicitée ou non sollicitée, ou bien à une conduite de retour et/ou
- en ce que, par moteur hydraulique (20, 20'), au moins une enceinte à pression (26) sollicitée est raccordée à un accumulateur hydraulique (70, 70').

2. Dispositif selon la revendication 1, caractérisé en ce que le moteur hydraulique (20, 20') est un moteur hydraulique à piston pivotant.

3. Dispositif selon la revendication 1, caractérisé en ce que le clapet anti-retour (55) est réglable.

4. Dispositif selon la revendication 1, caractérisé en ce que le clapet anti-retour (55) est susceptible d'être fermé en direction de l'enceinte à pression (25) sollicitée.

5. Dispositif selon la revendication 1, caractérisé en ce que le bras de levier (35, 35') agit, par l'intermédiaire d'une barre (36, 36'), sur le support de roue (4, 5), son bras articulé (11, 12) ou bien le corps d'essieu.

6. Dispositif selon la revendication 4, caractérisé en ce que la barre (36, 36') est orientée à peu près parallèlement à la direction de débattement ou déformation en compression du support de roue (4, 5) ou du corps d'essieu.
